# EUROPEAN PATENT APPLICATION

(11) **EP 4 600 723 A1**
(43) Date of publication of application: **13.08.2025**
(21) Application number: 24214529.0
(22) Date of filing: 21.11.2024
(51) Int. Cl.: G02F 1/1335, G02F 1/1339

(54) **DISPLAY PANEL**

(30) Priority: 06.02.2024 US 202463550568 P; 10.05.2024 TW 113117476
(71) Applicant: Hannstar Display Corporation, Taipei City 114762 (TW)
(72) Inventor: CHIAO, Yu-Chi, Taipei City 114762 (TW); SU, Chen-Hao, Taipei City 114762 (TW); YEH, Cheng-Yen, Taipei City 114762 (TW); KANG, Mu-Kai, Taipei City 114762 (TW); CHANG, Chung Lin, Taipei City 114762 (TW)
(74) Representative: Becker, Eberhard

(57) **Abstract**

A display panel (10) includes a first substrate (101), a second substrate (102), a plurality of pixel structures (PX, PX1, PX2, PX3), a plurality of color filter patterns (CFP1, CFP2, CFP3), a plurality of spacers (SP), and a liquid crystal layer (LCL). The pixel structures (PX, PX1, PX2, PX3) are disposed on the first substrate (101), and each pixel structure (PX) includes a reflective electrode (RE). The color filter patterns (CFP1, CFP2, CFP3) respectively overlap the reflective electrodes (RE) of the pixel structures (PX, PX1, PX2, PX3). The spacers (SP) and the liquid crystal layer (LCL) are disposed between the first substrate (101) and the second substrate (102). The pixel structures (PX, PX1, PX2, PX3) include a first pixel structure (PX1), the spacers (SP) include a first spacer (SP), and the color filter patterns (CFP1, CFP2, CFP3) include a first color filter pattern (CFP1). The reflective electrode (RE) of the first pixel structure (PX1) of the pixel structures (PX, PX1, PX2, PX3) overlaps the first spacer (SP) of the spacers (SP) and the first color filter pattern (CFP1) of the color filter patterns (CFP1, CFP2, CFP3), and at least a portion of the first spacer (SP) does not overlap the first color filter pattern (CFP1).

## Description

### BACKGROUND

### Technical Field

The disclosure relates to a display panel, and particularly relates to a display panel provided with a spacer.

### Description of Related Art

Generally speaking, in order to form a cavity for filling the liquid crystal material, most liquid crystal display panels use spacers to separate the upper and lower substrates at a specific distance. In a reflective LCD panel, considering that the surface flatness of the film layer used to support the spacer on the substrate cannot be too poor, a current method is to set the spacer on the color filter pattern. However, such a design will significantly affect the light transmittance of the color filter pattern, resulting in poor color performance of the reflective LCD panel, such as color shift or reduction in color gamut.

### SUMMARY

The disclosure provides a display panel in which the arrangement of the spacers has a slight impact on the display color.

A display panel of the disclosure includes a first substrate, a second substrate, a plurality of pixel structures, a plurality of color filter patterns, a plurality of spacers, and a liquid crystal layer. The first substrate and the second substrate are disposed to overlap each other. The plurality of pixel structures are disposed on the first substrate, and each pixel structure includes a reflective electrode. The plurality of color filter patterns respectively overlap the plurality of reflective electrodes of the pixel structures. The plurality of spacers are disposed between the first substrate and the second substrate. The liquid crystal layer is disposed between the first substrate and the second substrate. The pixel structures include a first pixel structure, the spacers include a first spacer, and the color filter patterns include a first color filter pattern. The reflective electrode of the first pixel structure overlaps the first spacer and the first color filter pattern, and at least a portion of the first spacer does not overlap the first color filter pattern.

In an embodiment of the disclosure, the display panel further includes a plurality of light-transmitting patterns. The light-transmitting patterns respectively overlap the plurality of reflective electrodes of the pixel structures. The light-transmitting patterns include a first light-transmitting pattern, the reflective electrode of the first pixel structure overlaps the first light-transmitting pattern, and the first spacer overlaps the first light-transmitting pattern.

In an embodiment of the disclosure, an orthographic projection of the first spacer of the display panel on a substrate surface of the second substrate is located within an orthographic projection of the reflective electrode of the first pixel structure on the substrate surface of the second substrate.

In an embodiment of the disclosure, the pixel structures of the display panel further include a second pixel structure, the color filter patterns further include a second color filter pattern, the light-transmitting patterns further include a second light-transmitting pattern, and the spacers also include a second spacer. The reflective electrode of the second pixel structure overlaps the second color filter pattern, the second light-transmitting pattern, and the second spacer. The second spacer overlaps the second light-transmitting pattern, and an orthographic projection of the second spacer on the substrate surface of the second substrate is located within an orthographic projection of the reflective electrode of the second pixel structure on the substrate surface of the second substrate.

In an embodiment of the disclosure, the display panel further includes a first alignment layer and a second alignment layer that are respectively disposed on the first substrate and the second substrate and have the liquid crystal layer sandwiched therebetween. The first alignment layer has a first alignment direction, and the second alignment layer has a second alignment direction. An orthographic projection contour of the first spacer on the substrate surface of the second substrate is long-strip shaped, and an extending direction of the first spacer is parallel to the first alignment direction or the second alignment direction.

In an embodiment of the disclosure, the pixel structures of the display panel further include the second pixel structure, the color filter patterns further include the second color filter pattern, the light-transmitting patterns further include the second light-transmitting pattern, and the spacers also include the second spacer. The reflective electrode of the second pixel structure overlaps the second color filter pattern, the second light-transmitting pattern, and the second spacer. The second spacer overlaps the second color filter pattern, and the orthographic projection of the second spacer on the substrate surface of the second substrate is located within the orthographic projection of the reflective electrode of the second pixel structure on the substrate surface.

In an embodiment of the disclosure, an orthographic projection area of the first spacer of the display panel on the substrate surface is different from an orthographic projection area of the second spacer on the substrate surface.

In an embodiment of the disclosure, the first spacer of the display panel has a first height along a normal direction of the substrate surface, the second spacer has a second height along the normal direction of the substrate surface, and the first height is different from the second height.

In an embodiment of the disclosure, the pixel structures of the display panel further include the second pixel structure, and the second pixel structure is adjacent to the first pixel structure. The color filter patterns also include the second color filter pattern. The reflective electrode of the second pixel structure overlaps the second color filter pattern. The orthographic projection contour of the first spacer on the substrate surface of the second substrate is long-strip shaped or dot-shaped, and the first spacer partially overlaps a region between the reflective electrode of the first pixel structure and the reflective electrode of the second pixel structure.

In an embodiment of the disclosure, the display panel further includes the first alignment layer and the second alignment layer that are respectively disposed on the first substrate and the second substrate and have the liquid crystal layer sandwiched therebetween. The first alignment layer has the first alignment direction, and the second alignment layer has the second alignment direction. The orthographic projection contour of the first spacer on the substrate surface of the second substrate is long-strip shaped, the extending direction of the first spacer is parallel to the first alignment direction or the second alignment direction, and a width of an end portion of the first spacer gradually decreases toward the first alignment direction or the second alignment direction.

In an embodiment of the disclosure, the display panel further includes the first alignment layer and the second alignment layer that are respectively disposed on the first substrate and the second substrate and have the liquid crystal layer sandwiched therebetween. The first alignment layer has the first alignment direction, and the second alignment layer has the second alignment direction. The pixel structures also include the second pixel structure, and the second pixel structure is adjacent to the first pixel structure. The color filter patterns also include the second color filter pattern, and the reflective electrode of the second pixel structure overlaps the second color filter pattern. The orthographic projection contour of the first spacer on the substrate surface of the second substrate has a shape of a rhombus, an extending direction of a virtual connecting line of two opposite corners of four corners of the rhombus is parallel to the first alignment direction or the second alignment direction, and the first spacer partially overlaps the region between the reflective electrode of the first pixel structure and the reflective electrode of the second pixel structure.

In an embodiment of the disclosure, a first portion of the reflective electrode of the first pixel structure of the display panel overlaps the first color filter pattern but does not overlap the first spacer, and a second portion of the reflective electrode of the first pixel structure overlaps the first spacer but does not overlap the first color filter pattern.

In an embodiment of the disclosure, the display panel further includes the plurality of light-transmitting patterns that respectively overlap the plurality of reflective electrodes of the pixel structures. The light-transmitting patterns include the first light-transmitting pattern. The first portion and the second portion of the reflective electrode of the first pixel structure do not overlap the first light-transmitting pattern, and a third portion of the reflective electrode of the first pixel structure overlaps the first light-transmitting pattern but does not overlap the first color filter pattern and the first spacer.

In an embodiment of the disclosure, the first pixel structure of the display panel further includes an insulating layer and an active component. The spacers also include the second spacer. The active component is disposed on the first substrate, and the insulating layer is disposed on the active component and has an opening that overlaps the reflective electrode of the first pixel structure. The reflective electrode of the first pixel structure is disposed on the insulating layer and extends into the opening to be electrically connected to the active component, and the opening of the insulating layer overlaps the second spacer.

In an embodiment of the disclosure, the pixel structures of the display panel further include the second pixel structure, the color filter patterns further include the second color filter pattern, and the reflective electrode of the second pixel structure overlaps the second color filter pattern. An orthographic projection area of the first color filter pattern on the substrate surface of the second substrate is different from an orthographic projection area of the second color filter pattern on the substrate surface.

Based on the above, in the display panel according to an embodiment of the disclosure, the plurality of spacers are disposed between the first substrate and the second substrate to control the film thickness of the liquid crystal layer. Since at least a portion of the spacers do not overlap the plurality of color filter patterns, the impact on the light transmittances of the color filter patterns may be effectively reduced, thereby ensuring the color performance of the display panel.

### BRIEF DESCRIPTION OF THE DRAWINGS

FIG. 1 and FIG. 2 are schematic front views of part of film layers of a display panel according to a first embodiment of the disclosure.
FIG. 3 is a schematic cross-sectional view of the display panel of FIG. 1.
FIG. 4 and FIG. 5 are schematic front views of part of film layers of a display panel according to a second embodiment of the disclosure.
FIG. 6 is a schematic cross-sectional view of the display panel of FIG. 4.
FIG. 7 is a schematic front view of part of film layers of a display panel according to a third embodiment of the disclosure.
FIG. 8 is a schematic front view of part of film layers of a display panel according to a fourth embodiment of the disclosure.
FIG. 9 is a schematic front view of a modified embodiment of part of the film layers of the display panel of FIG. 8.
FIG. 10 is a schematic front view of another modified embodiment of part of the film layers of the display panel of FIG. 8.
FIG. 11 and FIG. 12 are schematic front views of part of film layers of a display panel according to a fifth embodiment of the disclosure.
FIG. 13 is a schematic cross-sectional view of the display panel of FIG. 11.
FIG. 14 is a schematic front view of part of film layers of a display panel according to a sixth embodiment of the disclosure.
FIG. 15 is a schematic front view of part of film layers of a display panel according to a seventh embodiment of the disclosure.
FIG. 16 is a schematic front view of part of film layers of a display panel according to an eighth embodiment of the disclosure.

### DESCRIPTION OF THE EMBODIMENTS

In the following detailed description of the preferred embodiments, reference is made to the accompanying drawings which form a part hereof, and in which are shown by way of illustration specific embodiments in which the invention may be practiced. In this regard, directional terminology, such as "top," "bottom," "front," "back," etc., is used with reference to the orientation of the Figure(s) being described. The components of the present invention can be positioned in a number of different orientations. As such, the directional terminology is used for purposes of illustration and is in no way limiting.

Ordinal numbers, such as "first" and "second", used in the specification and claims are used to modify elements, and the terms do not imply or represent that the element(s) have any previous ordinal numbers, nor do they represent the order of a certain element and another element or the order of a manufacturing method. The use of the ordinal numbers is only used to clearly distinguish between an element with a certain name and another element with the same name. The claims and the specification may not use the same terms, whereby a first component in the specification may be a second component in the claims.

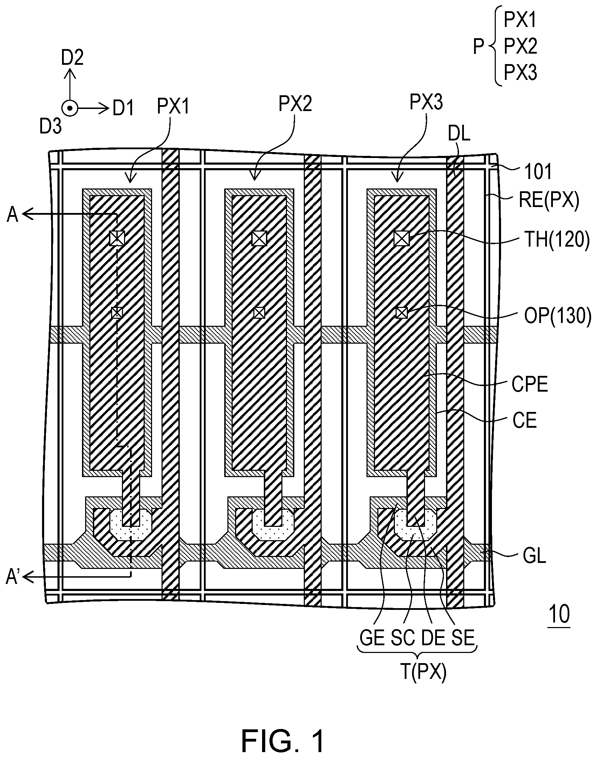

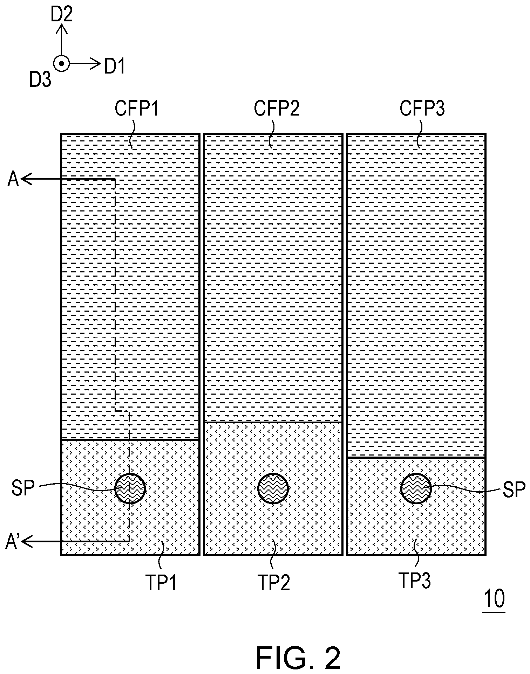

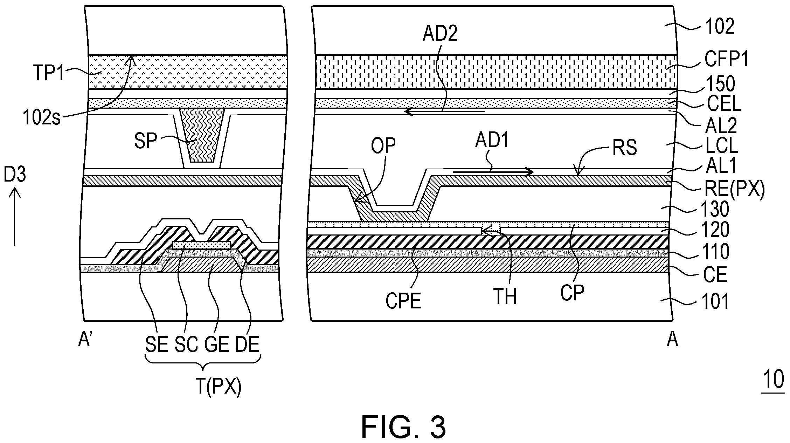

FIG. 1 and FIG. 2 are schematic front views of part of film layers of a display panel according to a first embodiment of the disclosure. FIG. 3 is a schematic cross-sectional view of the display panel of FIG. 1. FIG. 3 corresponds to a cross-section line A-A' of FIG. 1 and FIG. 2. For clear presentation, FIG. 1 only shows part of the film layers on a first substrate 101 in FIG. 3, and FIG. 2 only shows part of the film layers on a second substrate 102 in FIG. 3.

Referring to FIG. 1 to FIG. 3, a display panel 10 includes a first substrate 101, a second substrate 102, a plurality of data lines DL, a plurality of scan lines GL, a plurality of pixel structures PX, and a liquid crystal layer LCL. The first substrate 101 and the second substrate 102 are disposed to overlap each other, and the liquid crystal layer LCL is disposed between the first substrate 101 and the second substrate 102. The overlapping relationship here means, for example, that the first substrate 101 and the second substrate 102 overlap each other along a normal direction (e.g., a direction D3) of a substrate surface 102s of the second substrate 102. Unless otherwise mentioned below, the overlapping relationship between the two components is defined in this way, and the overlapping direction will not be repeated.

In the embodiment, the plurality of data lines DL are, for example, arranged at intervals on the first substrate 101 along a direction D1 and each thereof extends in a direction D2, and the plurality of scan lines GL are, for example, arranged at intervals on the first substrate 101 along the direction D2 and each thereof extends in the direction D1. More specifically, the scan lines GL intersect the data lines DL and define a plurality of pixel regions of the display panel 10.

The plurality of pixel structures PX are respectively disposed in the pixel regions, and each pixel structure is electrically connected to the scan line GL and the data line DL. For example, the plurality of pixel structures PX may be arranged in a plurality of columns respectively extending along the direction D2 and a plurality of rows respectively extending along the direction D1. That is, the pixel structures PX are arranged in an array on the first substrate 101.

In detail, each of the pixel structures PX may include an active component T and a reflective electrode RE that are electrically connected to each other. In the embodiment, the method of forming the active component T may include the following steps. A gate GE, a gate insulating layer 110, a semiconductor pattern SC, a source SE, and a drain DE are sequentially formed on the first substrate 101. The semiconductor pattern SC is disposed to overlap the gate GE. The source SE and the drain DE overlap the semiconductor pattern SC and are in electrical contact with two different regions of the semiconductor pattern SC. In the embodiment, the gate GE of the active component T may be selectively disposed under the semiconductor pattern SC to form a bottom-gate TFT, but the disclosure is not limited thereto. In other embodiments, the gate of the active component may be selectively disposed above the semiconductor pattern to form a top-gate TFT.

Furthermore, the active component T may be sequentially covered with an insulating layer 120 and an insulating layer 130. In the embodiment, the insulating layer 120 is, for example, a passivation layer, and the insulating layer 130 is, for example, a planarization layer. For example, in the embodiment, the pixel structure PX may also include a common electrode CE, a capacitor electrode CPE, and a conductive pattern CP that overlap each other, but the disclosure is not limited thereto. The common electrode CE is disposed between the first substrate 101 and the gate insulating layer 110. The capacitor electrode CPE is disposed between the gate insulating layer 110 and the insulating layer 120. Therefore, the capacitor electrode CPE, the common electrode CE, and the gate insulating layer 110 sandwiched therebetween can form a storage capacitor. In other embodiments, the pixel structure PX may not include the common electrode CE and the capacitor electrode CPE that overlap each other. The conductive pattern CP is disposed between the insulating layer 120 and the insulating layer 130.

In the embodiment, the insulating layer 130 has an opening OP, and the opening OP exposes part of surface of the conductive pattern CP. The reflective electrode RE of the pixel structure PX is disposed on the surface of the insulating layer 130 and electrically connected to the conductive pattern CP via the opening OP of the insulating layer 130. The conductive pattern CP is electrically connected to the capacitor electrode CPE via a contact hole TH of the insulating layer 120, and the capacitor electrode CPE can extend from the drain DE of the active component T (i.e., the drain DE and the capacitor electrode CPE are coupled to each other), but the disclosure is not limited thereto. In other embodiments, the pixel structure PX may not include the conductive pattern CP, and the reflective electrode RE is electrically connected to the drain DE of the active component T via a through hole penetrating through the insulating layer 130 and the insulating layer 120.

It should be noted that, the gate GE, the source SE, the drain DE, the semiconductor pattern SC, the gate insulating layer 110, the passivation layer (i.e., the insulating layer 120), and the planarization layer (i.e., the insulating layer 130) may be respectively implemented by any gate, any source, any drain, any semiconductor pattern, any gate insulating layer, any passivation layer, and any planarization layer of the reflective display panel well known to those skilled in the art, and the gate GE, the source SE, the drain DE, the semiconductor pattern SC, the gate insulating layer 110, the passivation layer, and the planarization layer may be formed by any method well known to those skilled in the art, and therefore will not be repeated.

Furthermore, the display panel 10 further includes a plurality of color filter patterns disposed on the second substrate 102 and respectively overlap a plurality of reflective electrodes RE of the plurality of pixel structures PX. In the embodiment, the plurality of color filter patterns include, for example, a color filter pattern CFP1, a color filter pattern CFP2, and a color filter pattern CFP3, and the colors of the three color filter patterns are all different. For example, the color filter pattern CFP1 is adapted to allow red light to pass through, the color filter pattern CFP2 is adapted to allow green light to pass through, the color filter pattern CFP3 is adapted to allow blue light to pass through (i.e., the color filter pattern CFP1 may include a red color resist, the color filter pattern CFP2 may include a green color resist, and the color filter pattern CFP3 may include a blue color resist).

The color filter pattern CFP1, the color filter pattern CFP2, and the color filter pattern CFP3 respectively overlap a pixel structure PX1, a pixel structure PX2, and a pixel structure PX3 of the plurality of pixel structures PX. In the embodiment, each pixel unit P includes three pixel structures PX, that is, it includes the pixel structure PX1, the pixel structure PX2, and the pixel structure PX3. The pixel structure PX1, the pixel structure PX2, and the pixel structure PX3 respectively overlap the color filter pattern CFP1, the color filter pattern CFP2, and the color filter pattern CFP3 of different colors to display different colors, but the disclosure is not limited thereto. For example, each pixel structure PX may be a pixel structure of a subpixel, and each pixel unit P may be a pixel structure of a pixel, which includes pixel structures of three subpixels. In other embodiments, the number of the pixel structures PX in each pixel unit P may be greater than 3 or less than 3. It is particularly noted that FIG. 1 only shows a schematic front view of one pixel unit P. The display panel 10 may have a plurality of pixel units P arranged along the direction D1 and the direction D2. For the schematic front view of each pixel unit P, reference may be made to FIG. 1 and therefore will not be repeated. A percentage value (which can also be called a first percentage value) of an orthographic projection area of the color filter pattern CFP1 on a reflective surface RS (i.e., a first reflective surface) of the reflective electrode RE of the pixel structure PX1 and an area of the first reflective surface, a percentage value (which can also be called a second percentage value) of an orthographic projection area of the color filter pattern CFP2 on a reflective surface RS (i.e., a second reflective surface) of the reflective electrode RE of the pixel structure PX2 and an area of the second reflective surface, and a percentage value (which can also be called a third percentage value) of an orthographic projection area of the color filter pattern CFP3 on a reflective surface RS (i.e., a third reflective surface) of the reflective electrode RE of the pixel structure PX3 and an area of the third reflective surface may be different from each other, or two of the first to third percentage values are the same as each other and the two percentage values are different from the remaining one of the percentage values to meet specific color performance requirements. From another point of view, the orthographic projection areas of the color filter patterns CFP1, CFP2, and CFP3 on the substrate surface 102s of the second substrate 102 may be different from each other, or two of the orthographic projection areas of the color filter patterns CFP1, CFP2, and CFP3 on the substrate surface 102s of the second substrate 102 are the same as each other and the two orthographic projection areas are different from the remaining one of the orthographic projection areas.

For example, in the embodiment, sorting according to the sizes of the orthographic projection areas of the color filter patterns on the substrate surface 102s of the second substrate 102, the order from large to small is the color filter pattern CFP3, the color filter pattern CFP1, and the color filter pattern CFP2, but the disclosure is not limited thereto. For example, in other embodiments, the orthographic projection area of the color filter pattern CFP1 on the substrate surface 102s of the second substrate 102 may be equal to the orthographic projection area of the color filter pattern CFP2 on the substrate surface 102s of the second substrate 102, and the orthographic projection area of the color filter pattern CFP3 on the substrate surface 102s of the second substrate 102 may be greater than each of the orthographic projection areas of the color filter pattern CFP1 and the color filter pattern CFP2 on the substrate surface 102s of the second substrate 102, but the disclosure is not limited thereto.

Furthermore, in the embodiment, the display panel 10 may also selectively include a plurality of light-transmitting patterns disposed on the second substrate 102, and the light-transmitting patterns may respectively overlap the plurality of reflective electrodes RE of the plurality of pixel structures PX, but the disclosure is not limited thereto. As shown in FIG. 1 to FIG. 3, the plurality of light-transmitting patterns include, for example, a light-transmitting pattern TP1, a light-transmitting pattern TP2, and a light-transmitting pattern TP3, and the light-transmitting pattern TP1, the light-transmitting pattern TP2, and the light-transmitting pattern TP3 respectively overlap the pixel structure PX1, the pixel structure PX2, and the pixel structure PX3 of the plurality of pixel structures PX. In the pixel structure PX that overlaps the color filter pattern and the light-transmitting pattern, a portion of the reflective electrode RE of the pixel structure PX overlaps the color filter pattern but does not overlap the light-transmitting pattern, and another portion of the reflective electrode RE overlaps the light-transmitting pattern but does not overlap the color filter pattern. In particular, the light-transmitting pattern is adapted to allow light of a plurality of colors to pass through. For example, red light, green light, and blue light can all pass through the light-transmitting pattern. In some embodiments, the light-transmitting pattern may include, for example, a transparent photoresist, but the disclosure is not limited thereto. In the embodiment, each pixel structure PX in the pixel unit P is correspondingly disposed with the light-transmitting pattern, that is, the pixel structure PX1, the pixel structure PX2, and the pixel structure PX3 respectively overlap the light-transmitting pattern TP1, the light-transmitting pattern TP2, and the light-transmitting pattern TP3, but the disclosure is not limited thereto. In other embodiments, one or two of the pixel structure PX1, the pixel structure PX2, and the pixel structure PX3 in the pixel unit P are correspondingly disposed with the light-transmitting patterns, and the rest are not disposed with the light-transmitting patterns. For example, the pixel structure PX1 and the pixel structure PX2 can both overlap the light-transmitting patterns, but the pixel structure PX3 does not overlap the light-transmitting pattern. In the embodiment, sorting according to the sizes of the orthographic projection areas of the light-transmitting patterns on the substrate surface 102s of the second substrate 102, the order from large to small is the light-transmitting pattern TP2, the light-transmitting pattern TP1, and the light-transmitting pattern TP3, but the disclosure is not limited thereto.

It is particularly noted that in the embodiment, the color filter pattern and the light-transmitting pattern are both disposed on the second substrate 102 and located between the substrate surface 102s of the second substrate 102 and the liquid crystal layer LCL, but the disclosure is not limited thereto. In other embodiments, the color filter pattern and the light-transmitting pattern may be disposed on the second substrate 102 and located on a substrate surface of the second substrate 102 facing away from the liquid crystal layer LCL (i.e., another substrate surface of the second substrate 102 opposite to the substrate surface 102s). In still some embodiments, the color filter pattern and the light-transmitting pattern may be disposed on the first substrate 101 and located between the reflective electrode RE of the pixel structure PX and the liquid crystal layer LCL.

Herein, one, another one, and the remaining one of the pixel structure PX1, the pixel structure PX2, and the pixel structure PX3 may be respectively referred to as a first pixel structure, a second pixel structure, and a third pixel structure; one, another one, and the remaining one of the color filter pattern CFP1, the color filter pattern CFP2, and the color filter pattern CFP3 may be respectively referred to as a first color filter pattern, a second color filter pattern, and a third color filter pattern; and one, another one, and the remaining one of the light-transmitting pattern TP1, the light-transmitting pattern TP2, and the light-transmitting pattern TP3 may be respectively referred to as a first light-transmitting pattern, a second light-transmitting pattern, and a third light-transmitting pattern. In addition, although FIG. 2 shows the color filter patterns CFP1, CFP2, and CFP3 arranged sequentially along the direction D1, and the light-transmitting patterns TP1, TP2, and TP3 arranged sequentially along the direction D1 as an example, the arrangement order of the color filter patterns CFP1, CFP2, and CFP3 and the light-transmitting patterns TP1, TP2, and TP3 in the embodiment is not limited thereto.

In order to form a cavity capable of accommodating the liquid crystal layer LCL between the first substrate 101 and the second substrate 102, the display panel 10 further includes a plurality of spacers SP. In the embodiment, the spacers SP may be disposed on the second substrate 102 (i.e., the spacers SP are located between the second substrate 102 and a second alignment layer AL2), and overlap the plurality of reflective electrodes RE (i.e., an orthographic projection of the spacers SP on the substrate surface 102s of the second substrate 102 is located within an orthographic projection of the plurality of reflective electrodes RE on the substrate surface 102s). However, the disclosure is not limited thereto. In other embodiments, the spacer SP may be disposed on the first substrate 101 (i.e., the spacer SP is located between the first substrate 101 and a first alignment layer AL1).

In the embodiment, the plurality of spacers SP are disposed to overlap the plurality of light-transmitting patterns (e.g., the light-transmitting pattern TP1, the light-transmitting pattern TP2, and the light-transmitting pattern TP3). More specifically, an orthographic projection of the spacers SP on the substrate surface 102s of the second substrate 102 is located within an orthographic projection of the plurality of light-transmitting patterns on the substrate surface 102s. That is, each spacer SP can completely overlap a corresponding light-transmitting pattern (as shown in FIG. 2). In this way, it may avoid the problem that the light transmittances of the color filter patterns are reduced due to the arrangement of the spacers SP, thereby ensuring the color performance of the display panel 10.

For example, in the embodiment, a common electrode layer CEL and an overcoat layer 150 may also be disposed on the second substrate 102, but the disclosure is not limited thereto. In other embodiments, the common electrode layer CEL may be disposed on the first substrate 101, that is, between the first substrate 101 and the liquid crystal layer LCL. The common electrode layer CEL may be a transparent conductive layer including a transparent conductive material. For example, the common electrode layer CEL may include an indium-containing oxide, such as but not limited to indium tin oxide (ITO). The overcoat layer 150 covers the plurality of color filter patterns and light-transmitting patterns, and the common electrode layer CEL is disposed on the overcoat layer 150. The electric field generated between the common electrode layer CEL and the reflective electrode RE is adapted to drive a plurality of liquid crystal molecules (not shown) in the liquid crystal layer LCL to rotate, so as to form an arrangement state corresponding to the direction and intensity of the electric field. By changing the arrangement state of the liquid crystal molecules, the polarization state of the light passing through the liquid crystal layer LCL is changed to form a light emission brightness corresponding to the arrangement state.

In order to orient the arrangement of the plurality of liquid crystal molecules in the liquid crystal layer LCL in a natural state (i.e., not affected by external forces), the first alignment layer AL1 covering the plurality of reflective electrodes RE may also be disposed on the first substrate 101, and the second alignment layer AL2 covering the common electrode layer CEL may be disposed on the second substrate 102. The liquid crystal layer LCL is sandwiched between the first alignment layer AL1 and the second alignment layer AL2. For example, in the embodiment, a first alignment direction AD1 of the first alignment layer AL1 may be anti-parallel to a second alignment direction AD2 of the second alignment layer AL2. For example, the liquid crystal layer LCL may be driven in electrically controlled birefringence (ECB) mode. However, the disclosure is not limited thereto. In other embodiments, the first alignment direction AD1 may be perpendicular to the second alignment direction AD2. For example, the liquid crystal layer LCL may be driven in a twisted nematic (TN) mode.

In the embodiment, the display panel 10 may be a reflective display panel, and the reflective electrode RE can reflect ambient light or light from the front light module to display a corresponding image. Since each of the incident light and reflected light pass through the common electrode layer CEL once, the image will appear yellowish. For example, when the common electrode layer CEL includes indium tin oxide and a thickness of the common electrode layer CEL is 1200 to 1700 angstroms, the b* value of the color coordinate of the light passing through the common electrode layer CEL may be about 2 to 11, thus causing the image to appear yellowish. The yellowish problem may be solved by configuring the area of the color filter pattern and adopting the light-transmitting pattern to perform the color complementing. In addition, in the embodiment, the spacer SP is disposed to overlap the light-transmitting pattern, which can avoid affecting the transmission area of the color filter pattern, thereby maintaining the national television system committee (NTSC) range of the display panel 10.

Other embodiments will be enumerated below to describe the disclosure in detail, in which identical reference numerals indicate identical or similar components, and repeated descriptions of the same technical contents are omitted. For the detailed descriptions of the omitted parts, reference can be found in the previous embodiment, and no repeated description is contained in the following embodiments.

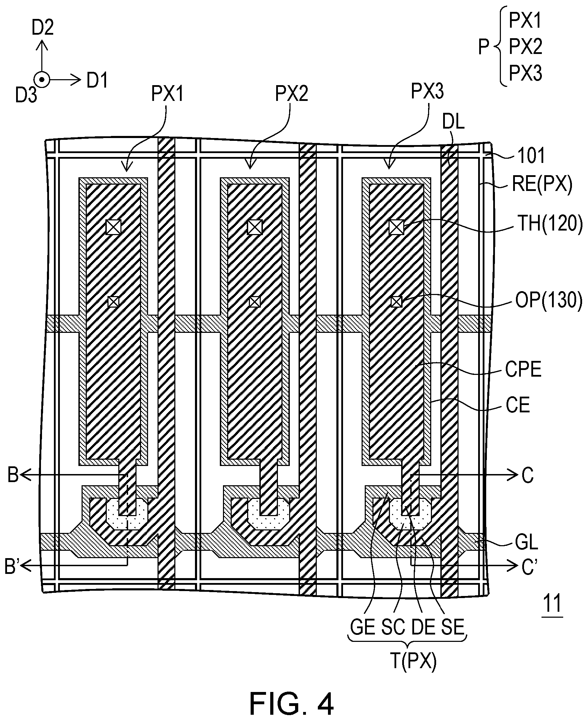

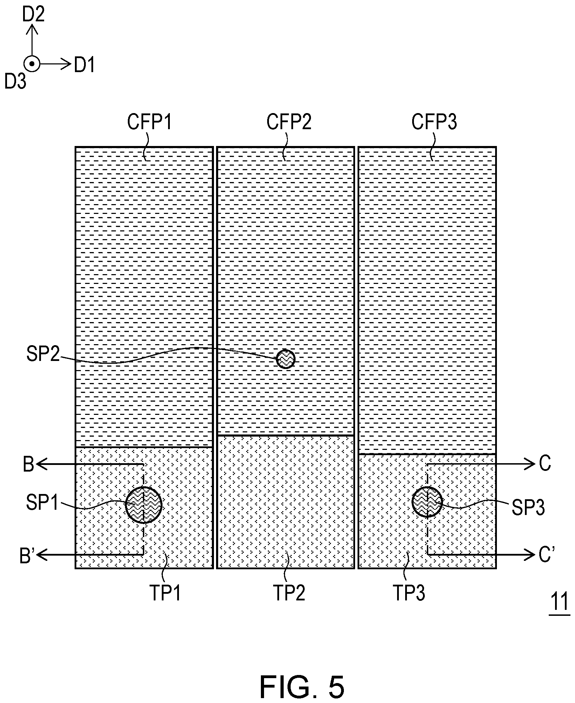

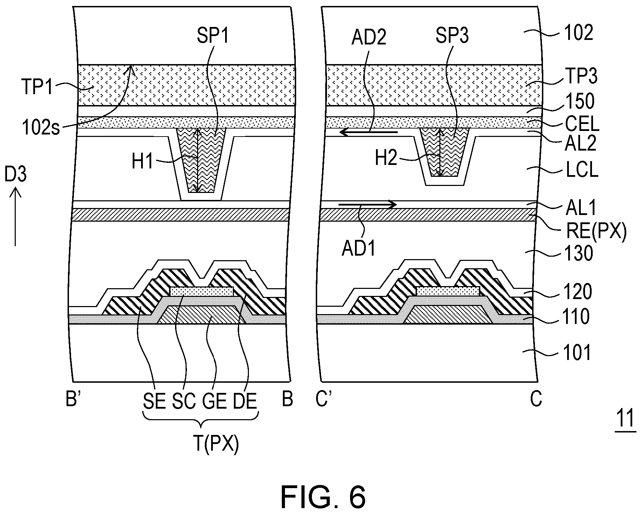

FIG. 4 and FIG. 5 are schematic front views of part of film layers of a display panel according to a second embodiment of the disclosure. FIG. 6 is a schematic cross-sectional view of the display panel of FIG. 4. FIG. 6 corresponds to a cross-section line B-B' and a cross-section line C-C' of FIG. 4 and FIG. 5. For clear presentation, FIG. 4 only shows part of the film layers on the first substrate 101 in FIG. 6, and FIG. 5 only shows part of the film layers on the second substrate 102 in FIG. 6.

Referring to FIG. 4 to FIG. 6, the difference between a display panel 11 of the embodiment and the display panel 10 of FIG. 1 and FIG. 2 is that the configuration method of the spacer is different. For example, in the embodiment, a portion of the spacers of the display panel 11 may be disposed to overlap the color filter patterns, and another portion of the spacers of the display panel 11 may be disposed to overlap the light-transmitting patterns. More specifically, the plurality of spacers of the display panel 11 may include a spacer SP1, a spacer SP2 and a spacer SP3 respectively overlapping the pixel structure PX1, the pixel structure PX2, and the pixel structure PX3. One or two of the spacers SP1, SP2, and SP3 in the pixel unit P overlap the light-transmitting patterns, and the remaining of the spacers SP1, SP2, and SP3 of the pixel unit P overlap the color filter patterns.

It is particularly important to note that in the embodiment, the following configuration is used as an example, that is, the spacer SP1 and the spacer SP3 are disposed to overlap the light-transmitting pattern TP1 and the light-transmitting pattern TP3 respectively, and do not overlap the color filter pattern CFP1 and the color filter pattern CFP3. However, the spacer SP2 is disposed to overlap the color filter pattern CFP2, and does not overlap the light-transmitting pattern TP2. The position configuration of the spacers in the embodiment is not limited to FIG. 5.

Further, the projections of the orthographic projection areas of at least two of the spacers SP1, SP2, and SP3 on the substrate surface 102s of the second substrate 102 may be different from each other. In particular, in the embodiment, the following configuration is used as an example. An orthographic projection area of the spacer SP1 on the substrate surface 102s of the second substrate 102, an orthographic projection area of the spacer SP2 on the substrate surface 102s, and an orthographic projection area of the spacer SP3 on the substrate surface 102s may be different from each other. For example, in the embodiment, since the spacer SP2 is disposed to overlap the second color filter pattern CFP2, in order to reduce the impact of the arrangement of the spacer SP2 on the light transmittance of the second color filter pattern CFP2, the orthographic projection area of the spacer SP2 on the substrate surface 102s may be less than the orthographic projection area of the spacer SP1 on the substrate surface 102s and the orthographic projection area of the spacer SP3 on the substrate surface 102s. In addition, the orthographic projection area of the spacer SP1 on the substrate surface 102s may be greater than the orthographic projection area of the spacer SP3 on the substrate surface 102s to adjust the color gamut of the display panel 11, but the disclosure is not limited thereto. The area configuration of the spacers in the embodiment is not limited to the above description.

Further, heights of at least two of the spacers SP1, SP2, and SP3 along the normal direction (e.g., the direction D3) of the substrate surface 102s may be different from each other. Specifically, in the embodiment, the following configuration is used as an example. A first height H1 of the spacer SP1 along the normal direction (e.g., the direction D3) of the substrate surface 102s may be different from a second height H2 of the spacer SP3 along the normal direction of the substrate surface 102s. For example, the first height H1 of the spacer SP1 may be greater than the second height H2 of the spacer SP3. The height arrangement of the spacers in the embodiment is not limited to the above description. By designing the at least two of the spacers SP1, SP2, and SP3 to have different heights, the cell gaps in areas with spacers of different heights may be slightly different to further adjust the color gamut of the display panel 11.

Through the design of different heights, different areas, and different positions of the spacers, the adjustment flexibility of the color gamut performance of the display panel 11 may be increased, and the optimal NTSC range and transmittance of the display panel 11 may be adjusted to meet different product application requirements.

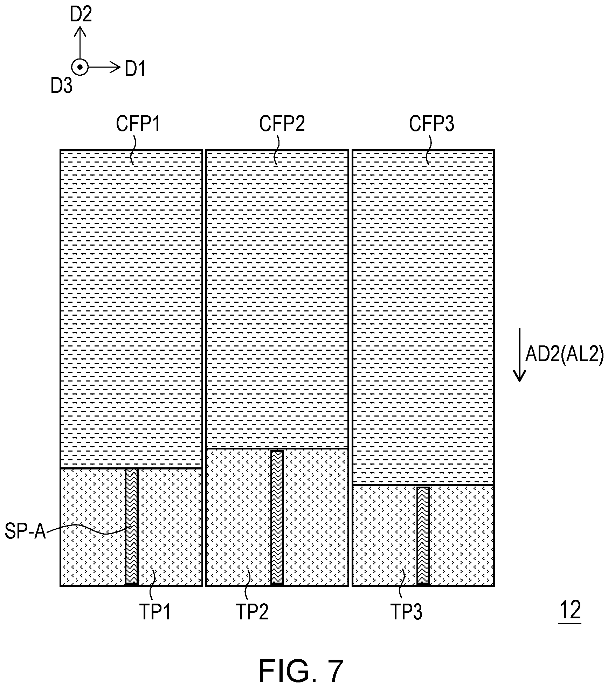

FIG. 7 is a schematic front view of part of film layers of a display panel according to a third embodiment of the disclosure. It should be noted first that, in addition to the film layers shown in FIG. 7, the film layer structures of a display panel 12 on the first substrate and the remaining film layer structures on the second substrate are similar to the display panel 10 of FIG. 1. Therefore, for the illustration and description of the film layer structures, reference may be made to the relevant paragraphs and the corresponding drawings of the previous embodiments.

Referring to FIG. 1, FIG. 3, and FIG. 7, the difference between the display panel 12 of the embodiment and the display panel 10 of FIG. 2 is that the configuration contour of the spacer is different. For example, in the embodiment, an orthographic projection contour of each of a plurality of spacers SP-A on the substrate surface 102s of the second substrate 102 is long-strip shaped, and the extending direction of each spacer SP-A is parallel to the second alignment direction AD2 of the second alignment layer AL2. Accordingly, the shape of the spacer SP-A in the embodiment can effectively reduce the poor alignment region of the second alignment layer AL2 caused by the arrangement of the spacer SP-A (for example, a weakly aligned region is formed near the spacer during rubbing alignment due to the arrangement of the spacer), thereby helping to reduce the dark state light leakage of the display panel 12 and further improving the display contrast and the NTSC of the display panel 12. In particular, FIG. 1, FIG. 3, and FIG. 7 take the spacer SP-A disposed on the second substrate 102 (i.e., the spacer SP-A is located between the second substrate 102 and the second alignment layer AL2) as an example, but the disclosure is not limited thereto. In other embodiments, the spacer SP-A may be disposed on the first substrate 101 (i.e., the spacer SP-A is located between the first substrate 101 and the first alignment layer AL1). The orthographic projection contour of each of the plurality of spacers SP-A on the substrate surface of the first substrate 101 facing the liquid crystal layer LCL is long-strip shaped. Moreover, the extending direction of each spacer SP-A is parallel to the first alignment direction AD1 of the first alignment layer AL1, thereby effectively reducing the poor alignment region of the first alignment layer AL1 caused by the arrangement of the spacer.

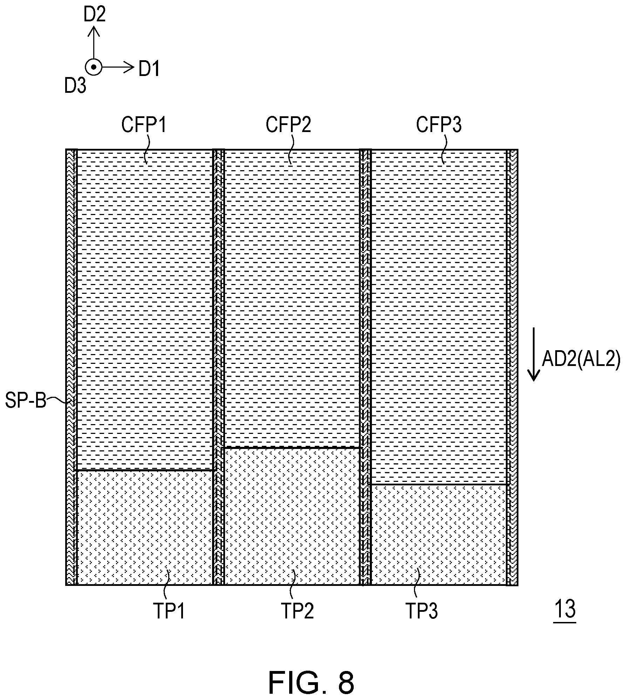

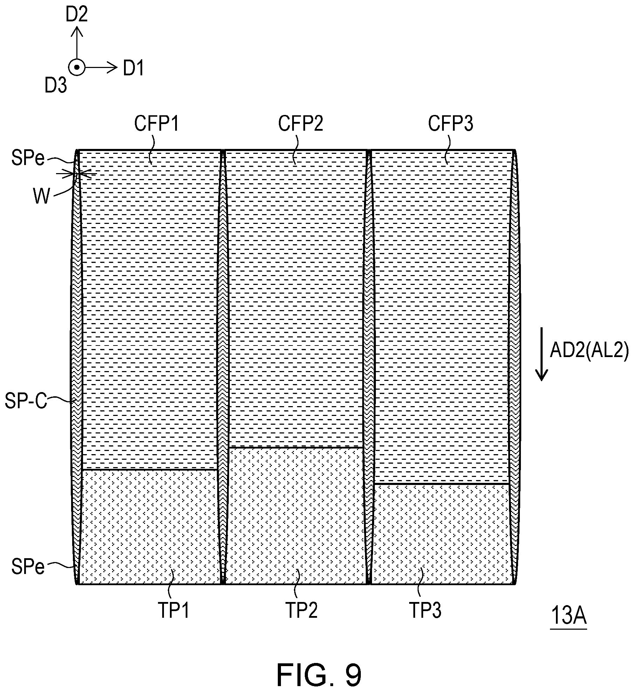

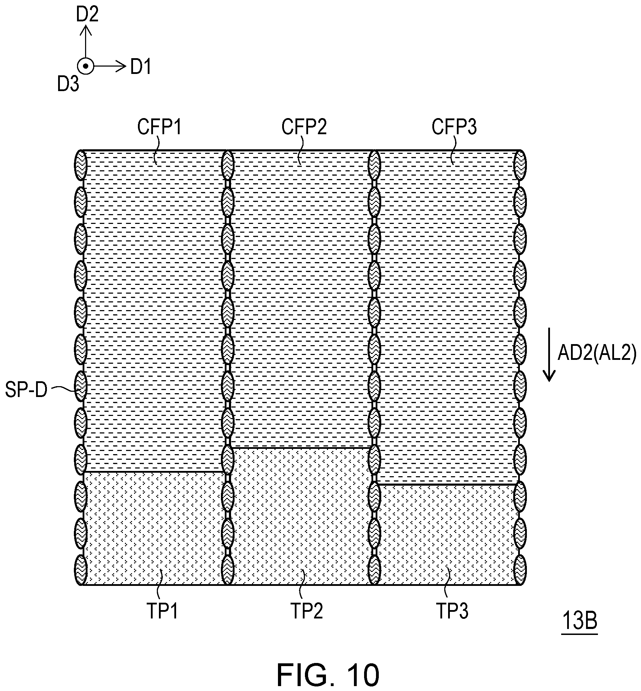

FIG. 8 is a schematic front view of part of film layers of a display panel according to a fourth embodiment of the disclosure. FIG. 9 is a schematic front view of a modified embodiment of part of the film layers of the display panel of FIG. 8. FIG. 10 is a schematic front view of another modified embodiment of part of the film layers of the display panel of FIG. 8. It should be noted first that, in addition to the film layers shown in FIG. 8, the film layer structures of a display panel 13 on the first substrate and the remaining film layer structures on the second substrate are similar to the display panel 10 of FIG. 1. Therefore, for the illustration and description of the film layer structures, reference may be made to the relevant paragraphs and the corresponding drawings of the previous embodiments.

Referring to FIG. 1, FIG. 3, and FIG. 8, the difference between the display panel 13 of the embodiment and the display panel 10 of FIG. 2 is that the configuration contour and position of the spacer are different. For example, in the embodiment, an orthographic projection contour of each of a plurality of spacers SP-B on the substrate surface 102s of the second substrate 102 is long-strip shaped. Of particular note is that each of the spacers SP-B is partially disposed between the reflective electrodes RE of two adjacent ones of the plurality of pixel structures PX (i.e., the spacer SP-B partially overlaps, in the direction D3, the region between the reflective electrodes RE of two adjacent ones of the plurality of pixel structures PX), and also overlaps the reflective electrode RE of at least one of two adjacent ones of the plurality of pixel structures PX (FIG. 1 and FIG. 8 are examples in which each of the spacers SP-B also overlaps the reflective electrodes RE of two adjacent ones of the plurality of pixel structures PX). More specifically, a portion of the spacer SP-B is disposed between the reflective electrodes RE of two adjacent pixel structures PX, and another portion of the spacer SP-B overlaps the reflective electrode of at least one of the two adjacent pixel structures PX. In addition, the another portion of the spacer SP-B also overlaps at least one of two adjacent ones of the plurality of color filter patterns (such as the color filter patterns CFP1 to CFP3) and at least one of two adjacent ones of the plurality of light-transmitting patterns (such as the light-transmitting patterns TP1 to TP3) (FIG. 8 is an example in which the another portion of the spacer SP-B also overlaps two adjacent ones of the plurality of color filter patterns and two adjacent ones of the plurality of light-transmitting patterns). Accordingly, the impact on the light transmittances of the color filter patterns may be effectively reduced, thereby ensuring the color performance of the display panel 13.

For example, since the arrangement of at least a portion of the liquid crystal layer LCL located in the region between two adjacent pixel structures PX (i.e., the region between two adjacent reflective electrodes RE) cannot be controlled by the reflective electrode RE, the dark state light leakage phenomenon occurs. In addition, in the embodiment, the voltage polarities of two reflective electrodes RE adjacently arranged along the direction D1 may be opposite in the same frame period. That is to say, the reflective display panel 13 is driven by a column-inversion or dot-inversion electrical structure, for example, but the disclosure is not limited thereto. The liquid crystal layer LCL driven based on the aforementioned electrical structure is prone to inversion of the arrangement of liquid crystal molecules in the region between two adjacent pixel structures PX, resulting in the dark state light leakage phenomenon. Therefore, by arranging the spacer SP-B between two adjacent ones of the plurality of pixel structures PX, the light leakage phenomenon of the reflective display panel 13 when operating in the dark state may be significantly improved, thereby improving its display contrast. From another perspective, the flexibility in selecting the driving electrical architecture of the reflective display panel 13 can be increased.

On the other hand, in the embodiment, the extending direction of each spacer SP-B is parallel to the second alignment direction AD2 of the second alignment layer AL2. Therefore, the poor alignment region of the second alignment layer AL2 caused by the arrangement of the spacer SP-B may be effectively reduced, which helps to reduce the dark state light leakage of the display panel 13 and thereby improve the display contrast. In particular, FIG. 1, FIG. 3, and FIG. 8 take the spacer SP-B being disposed on the second substrate 102 as an example (i.e., the spacer SP-B is located between the second substrate 102 and the second alignment layer AL2), but the disclosure is not limited thereto. In other embodiments, the spacer SP-B may be disposed on the first substrate 101 (i.e., the spacer SP-B is located between the first substrate 101 and the first alignment layer AL1), and the extending direction of each spacer SP-B is parallel to the first alignment direction AD1 of the first alignment layer AL1, thereby effectively reducing the poor alignment region of the first alignment layer AL1 caused by the arrangement of the spacer.

However, the disclosure is not limited thereto. Referring to FIG. 1, FIG. 3, and FIG. 9, in a display panel 13A of a modified embodiment, in addition to the extending direction of a spacer SP-C being parallel to the second alignment direction AD2, a width W of an end portion SPe on at least one side of the spacer SP-C in the extending direction also gradually decreases toward the second alignment direction AD2 or the anti-parallel direction of the second alignment direction AD2. In FIG. 9, the widths W of the two end portions SPe on two opposite sides of the spacer SP-C in the extending direction gradually decrease toward the second alignment direction AD2 and toward the anti-parallel direction of the second alignment direction AD2 respectively. Thereby, the poor alignment region of the second alignment layer AL2 caused by the arrangement of the spacer SP-C may be further reduced, which helps to reduce the dark state light leakage of the display panel 13A, thereby improving the display contrast. It should be noted that in FIG. 1, FIG. 3, and FIG. 9, the spacer SP-C is disposed on the second substrate 102 as an example, but the disclosure is not limited thereto. In other embodiments, the spacer SP-C may be disposed on the first substrate 101, the extending direction of each spacer SP-C is parallel to the first alignment direction AD1 of the first alignment layer AL1, and the widths of the two end portions on two opposite sides of the spacer SP-C in the extending direction gradually decrease toward the first alignment direction AD1 and toward the anti-parallel direction of the first alignment direction AD1 respectively, thereby effectively reducing the poor alignment region of the first alignment layer AL1 caused by the arrangement of the spacer.

Referring to FIG. 1, FIG. 3, and FIG. 10, in a display panel 13B of another modified embodiment, an orthographic projection contour of each of a plurality of spacers SP-D on the second substrate 102 is dot-shaped. Each of the spacers SP-D is partially disposed between the reflective electrodes RE of two adjacent ones of the plurality of pixel structures PX (i.e., the spacer SP-D partially overlaps, in the direction D3, the region between the reflective electrodes RE of two adjacent ones of the plurality of pixel structures PX), and also overlaps the reflective electrode RE of at least one of two adjacent ones of the plurality of pixel structures PX (FIG. 10 is an example in which each of the spacers SP-D also overlaps the reflective electrodes RE of two adjacent ones of the plurality of pixel structures PX). More specifically, a portion of each spacer SP-D is disposed between the reflective electrodes RE of two adjacent pixel structures PX, and another portion of each spacer SP-D overlaps the reflective electrode of at least one of the two adjacent pixel structures PX. Each of a portion of the spacers SP-D overlaps at least one of two adjacent ones of the plurality of color filter patterns (such as the color filter patterns CFP1 to CFP3), and each of another portion of the spacers SP-D overlaps at least one of two adjacent ones of the plurality of light-transmitting patterns (such as the light-transmitting patterns TP1 to TP3) (FIG. 10 is an example in which each of a portion of the spacers SP-D overlaps two adjacent ones of the plurality of color filter patterns, and each of another portion of the spacers SP-D overlaps two adjacent ones of the plurality of light-transmitting patterns). Accordingly, the impact on the light transmittances of the color filter patterns may be effectively reduced, thereby ensuring the color performance of the display panel 13B.

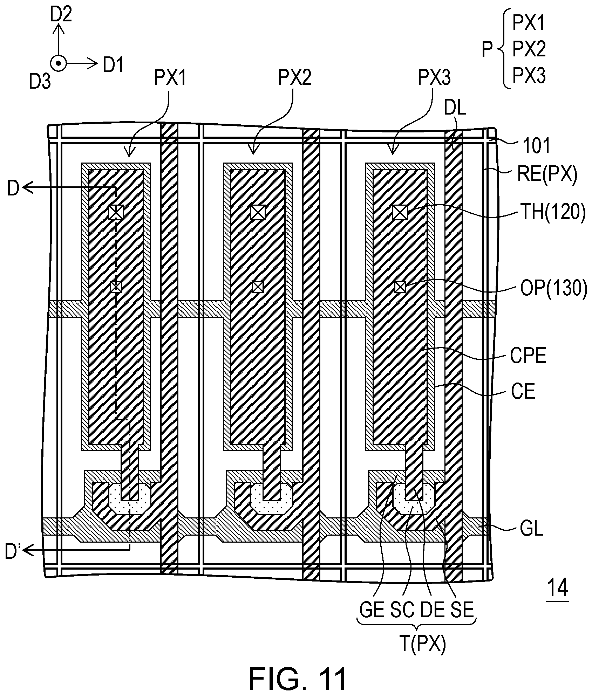

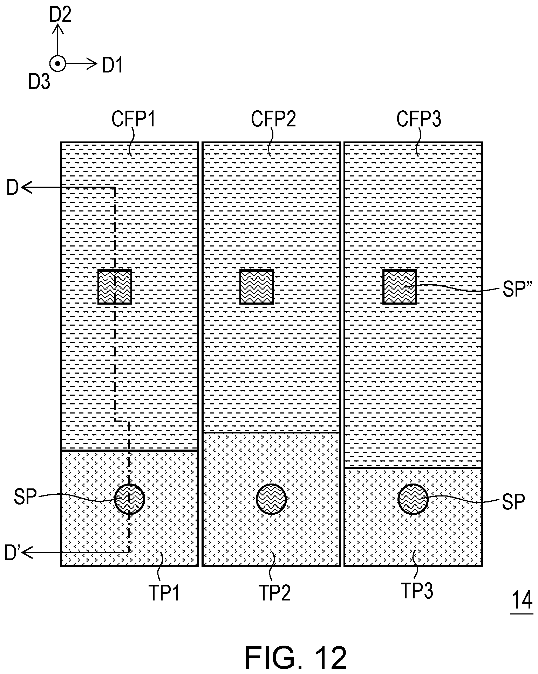

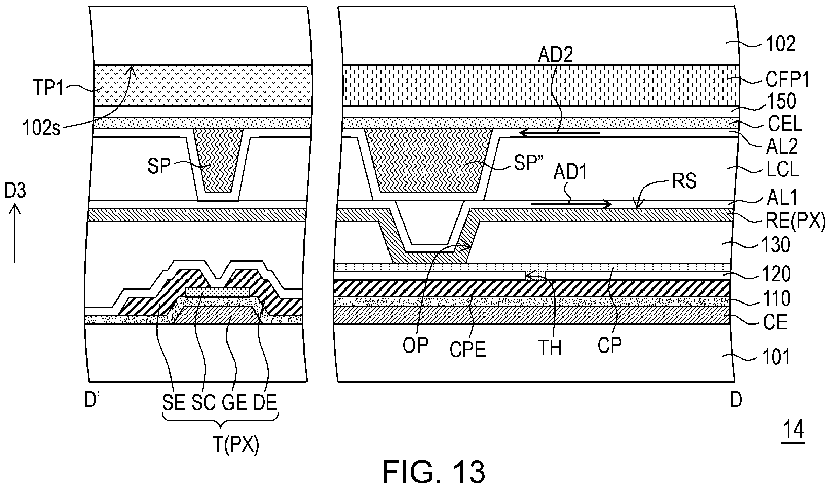

FIG. 11 and FIG. 12 are schematic front views of part of film layers of a display panel according to a fifth embodiment of the disclosure. FIG. 13 is a schematic cross-sectional view of the display panel of FIG. 11. FIG. 13 corresponds to a cross-section line D-D' of FIG. 11 and FIG. 12. For clear presentation, FIG. 11 only shows part of the film layers on the first substrate 101 in FIG. 13, and FIG. 12 only shows part of the film layers on the second substrate 102 in FIG. 13.

Referring to FIG. 11 to FIG. 13, the difference between a display panel 14 of the embodiment and the display panel 10 of FIG. 1 to FIG. 3 is that the configuration method of the spacer is different. For example, in the embodiment, the display panel 14 may further include a plurality of spacers SP" in addition to the plurality of spacers SP disposed to overlap the light-transmitting patterns. It is particularly noted that the spacers SP" may overlap the openings OP of the insulating layer 130 in the direction D3 respectively. More specifically, an orthographic projection of the opening OP on the first substrate 101 overlaps an orthographic projection of the spacer SP" on the first substrate 101, or an orthographic projection of the opening OP on the second substrate 102 overlaps an orthographic projection of the spacer SP" on the second substrate 102. Since the first alignment layer AL1 will have a depression near the opening OP due to the shape of the opening OP, the alignment process of the first alignment layer AL1 will cause the first alignment layer AL1 to be weakly aligned near the opening OP, resulting in the dark state light leakage phenomenon. In addition, the arrangement state of the liquid crystal layer LCL near the opening OP will be affected by the surface topography of the opening OP of the insulating layer 130, which may easily lead to poor alignment of liquid crystal molecules, leading to the dark state light leakage phenomenon. Therefore, the light leakage range of the display panel 14 may be reduced through the arrangement of the spacers SP". In addition, the arrangement of the spacers SP" can further increase the distribution density of the spacers to improve the resistance to pressing of the display panel 14. It should be noted that the spacer SP" of the embodiment can also be applied to the second embodiment. For example, FIG. 5 may also include the spacer SP", the position of which corresponds to the opening OP of FIG. 4.

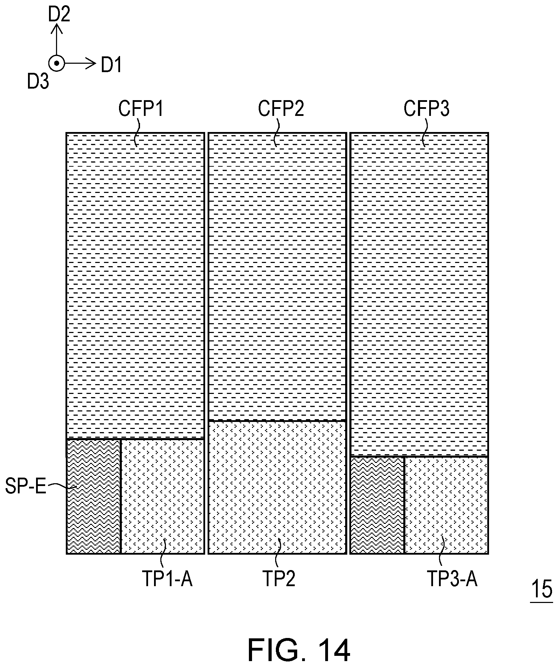

FIG. 14 is a schematic front view of part of film layers of a display panel according to a sixth embodiment of the disclosure. It should be noted first that, in addition to the film layers shown in FIG. 14, the film layer structures of a display panel 15 on the first substrate and the remaining film layer structures on the second substrate are similar to the display panel 10 of FIG. 1. Therefore, for the illustration and description of the film layer structures, reference may be made to the relevant paragraphs and the corresponding drawings of the previous embodiments.

Referring to FIG. 1, FIG. 3, and FIG. 14, the difference between the display panel 15 of the embodiment and the display panel 10 of FIG. 1 to FIG. 3 is that the configuration contour and position of the spacer are different. In the embodiment, a plurality of spacers SP-E overlap the plurality of reflective electrodes RE and do not overlap the plurality of color filter patterns and the plurality of light-transmitting patterns. In the embodiment, the pixel structures PX1, PX2, and PX3 of the pixel unit P have the color filter patterns CFP1, CFP2, and CFP3 respectively, and at least one of the pixel structures PX1, PX2, and PX3 also has the spacers SP-E and the light-transmitting patterns that do not overlap each other. More specifically, the spacers SP-E may be used to replace part of the light-transmitting patterns of FIG. 2 to form a configuration diagram of the color filter patterns, the light-transmitting patterns, and the spacers as shown in FIG. 14. Of particular note is that in the embodiment, the following configuration is used as an example. For example, part of the region where the light-transmitting pattern TP1 and the light-transmitting pattern TP3 are disposed in FIG. 2 is replaced with the spacers SP-E of the embodiment to form a configuration as shown in FIG. 14, that is, the pixel structure PX1 is correspondingly disposed with the color filter pattern CFP1, the light-transmitting pattern TP1-A, and the spacer SP-E that do not overlap one another, and the pixel structure PX3 is correspondingly disposed with the color filter pattern CFP3, the light-transmitting pattern TP3- A, and the spacer SP-E that do not overlap one another, but the disclosure is not limited thereto. From another point of view, the reflective electrode RE of the pixel structure PX has a first portion, a second portion, and a third portion that do not overlap one another. The first portion of the reflective electrode RE overlaps the color filter pattern in the direction D3 but does not overlap the light-transmitting pattern and the spacer SP-E, the second portion of the reflective electrode RE overlaps the spacer SP-E in the direction D3 but does not overlap the color filter pattern and the light-transmitting pattern, and the third portion of the reflective electrode RE overlaps the light-transmitting pattern in the direction D3 but does not overlap the color filter pattern and the spacer SP-E. Accordingly, in addition to improving the problem of reduced light transmittances of the light-transmitting patterns caused by the arrangement of the spacers so as to increase the brightness, the NTSC and color performance of the display panel 15 can also be improved.

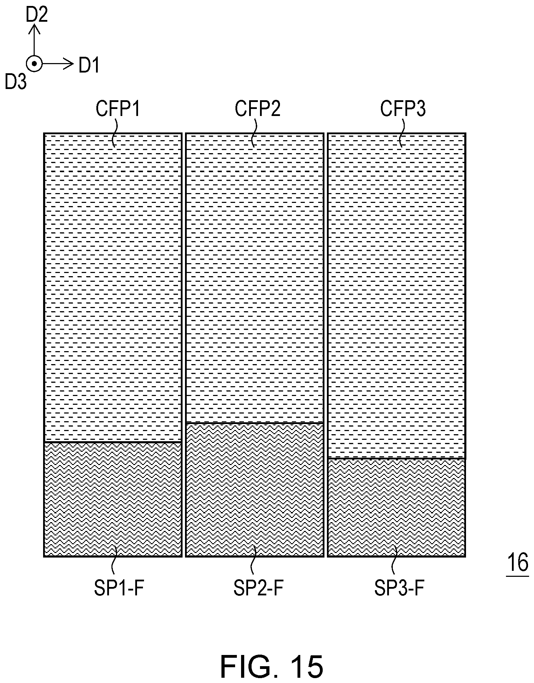

FIG. 15 is a schematic front view of part of film layers of a display panel according to a seventh embodiment of the disclosure. It should be noted first that, in addition to the film layers shown in FIG. 15, the film layer structures of a display panel 16 on the first substrate and the remaining film layer structures on the second substrate are similar to the display panel 10 of FIG. 1. Therefore, for the illustration and description of the film layer structures, reference may be made to the relevant paragraphs and the corresponding drawings of the previous embodiments.

Referring to FIG. 1, FIG. 3, and FIG. 15, the difference between the display panel 16 of the embodiment and the display panel 10 of FIG. 1 to FIG. 3 is that at least one of the pixel structures PX1, PX2, and PX3 of the display panel 10 is correspondingly disposed with the light-transmitting pattern, and the pixel structures PX1, PX2, and PX3 of the display panel 16 are not correspondingly disposed with the light-transmitting patterns, and regions of the pixel structures PX1, PX2, and PX3 of the display panel 16 that do not correspond to the color filter patterns are correspondingly disposed with the spacers. In the embodiment, the plurality of pixel structures have the color filter patterns but do not have the light-transmitting patterns, and the plurality of spacers overlap the plurality of reflective electrodes RE and do not overlap the plurality of color filter patterns. More specifically, the spacers may be used to replace all the light-transmitting patterns in the first embodiment. For example, the light-transmitting pattern TP1, the light-transmitting pattern TP2, and the light-transmitting pattern TP3 of FIG. 2 may be replaced by a spacer SP1-F, a spacer SP2-F, and a spacer SP3-F of the embodiment respectively. From another point of view, the reflective electrode RE of the pixel structure PX has the first portion and the second portion that do not overlap each other. The first portion of the reflective electrode RE overlaps the color filter pattern in the direction D3 but does not overlap the spacer, and the second portion of the reflective electrode RE overlaps the spacer in the direction D3 but does not overlap the color filter pattern. Accordingly, in addition to improving the problem of reduced light transmittances of the light-transmitting patterns caused by the arrangement of the spacers so as to increase the brightness, the NTSC and color performance of the display panel 16 can also be improved.

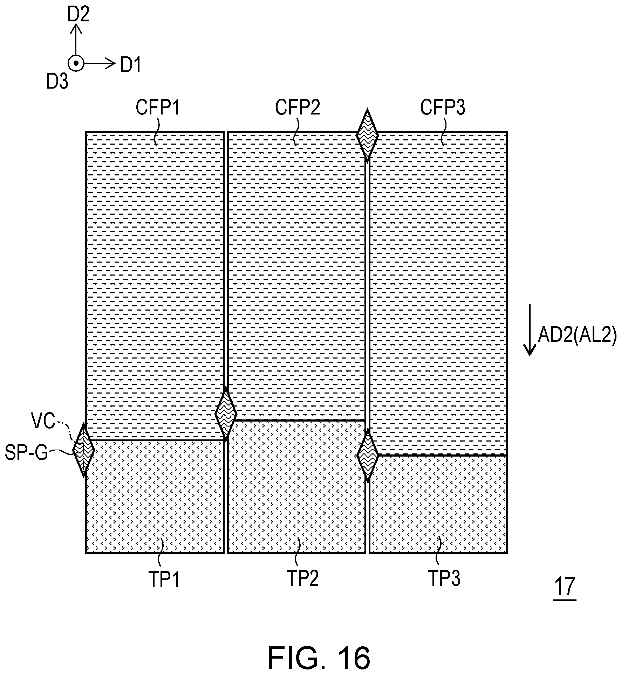

FIG. 16 is a schematic front view of part of film layers of a display panel according to an eighth embodiment of the disclosure. It should be noted first that, in addition to the film layers shown in FIG. 16, the film layer structures of a display panel 17 on the first substrate and the remaining film layer structures on the second substrate are similar to the display panel 10 of FIG. 1. Therefore, for the illustration and description of the film layer structures, reference may be made to the relevant paragraphs and the corresponding drawings of the previous embodiments.

Referring to FIG. 1, FIG. 3, and FIG. 16, the difference between the display panel 17 of the embodiment and the display panel 10 of FIG. 1 to FIG. 3 is that the configuration contour and position of the spacer are different. For example, in the embodiment, an orthographic projection contour of each of a plurality of spacers SP-G on the substrate surface 102s of the second substrate 102 has a shape of a rhombus. It is particularly important to note that each of the spacers SP-G is partially disposed between the reflective electrodes RE of two adjacent ones of the plurality of pixel structures PX (i.e., the spacer SP-G partially overlaps, in the direction D3, the region between the reflective electrodes RE of two adjacent ones of the plurality of pixel structures PX), and also overlaps the reflective electrode RE of at least one of two adjacent ones of the plurality of pixel structures PX (FIG. 16 is an example in which each of the spacers SP-G also overlaps the reflective electrodes RE of two adjacent ones of the plurality of pixel structures PX). More specifically, a portion of each spacer SP-G is disposed between two adjacent pixel structures PX, and another portion of each spacer SP-G overlaps the reflective electrode RE of at least one of the two adjacent pixel structures PX. In addition, each of at least a portion of the spacers SP-G may overlap at least one of two adjacent ones of the plurality of color filter patterns (such as the color filter patterns CFP1 to CFP3), or overlap at least one of two adjacent ones of the plurality of light-transmitting patterns (such as the light-transmitting patterns TP1 to TP3) (FIG. 16 is an example in which each of a portion of the spacers SP-G overlaps two adjacent ones of the plurality of color filter patterns, or overlaps two adjacent ones of the plurality of light-transmitting patterns). Accordingly, the impact on the light transmittances of the color filter patterns may be effectively reduced to increase the brightness, thereby improving the NTSC and color performance of the display panel 17.

On the other hand, in the embodiment, an extending direction of a virtual connecting line VC of two opposite corners of four corners of the orthographic projection contour (i.e., the rhombus) of each spacer SP-G on the substrate surface 102s of the second substrate 102 is parallel to the second alignment direction AD2 of the second alignment layer AL2. Therefore, the poor alignment region of the second alignment layer AL2 caused by the arrangement of the spacers SP-G may be effectively reduced, which helps to reduce the dark state light leakage of the display panel 17 and thereby improve the display contrast. It should be noted that in FIG. 1, FIG. 3, and FIG. 16, the spacer SP-G is disposed on the second substrate 102 as an example, but the disclosure is not limited thereto. In other embodiments, the spacer SP-G may be disposed on the first substrate 101, and the extending direction of the virtual connecting line of the two opposite corners of the four corners of the orthographic projection contour (i.e., the rhombus) of each spacer SP-G on the substrate surface of the first substrate 101 is parallel to the first alignment direction AD1 of the first alignment layer AL1. Accordingly, the poor alignment region of the first alignment layer AL1 caused by the arrangement of the spacers may be effectively reduced.

It should be noted that the embodiments can also be combined arbitrarily. For example, the spacer SP-B of FIG. 8, the spacer SP-C of FIG. 9, the spacer SP-D of FIG. 10, or the spacer SP-G of FIG. 16 can also be applied to the embodiments of FIG. 2, FIG. 5, FIG. 7, FIG. 12, FIG. 14, or FIG. 15, and the spacer SP" of FIG. 12 can also be applied to the embodiments of FIG. 2, FIG. 5, FIG. 7, FIG. 8, FIG. 9, FIG. 10, FIG. 14, FIG. 15, or FIG. 16.

In each of the above embodiments, the display panels 10 to 17 may be reflective display panels, and the reflective electrodes RE define the reflective regions of the pixel structures PX of the reflective display panels. In particular, the reflective display panel of the disclosure may be a fully reflective display panel in which each pixel structure has only a reflective region, or a transflective display panel in which each pixel structure has a reflective region and a transmissive region (not shown).

To sum up, in the display panel according to the embodiment of the disclosure, the plurality of spacers are disposed between the first substrate and the second substrate to control the thickness of the liquid crystal layer. Since at least a portion of the spacers are arranged not to overlap the plurality of color filter patterns, the impact on the light transmittances of the color filter patterns may be effectively reduced, thereby ensuring the color performance of the display panel.

## Claims

1. A display panel (10, 11, 12, 13, 13A, 13B, 14, 15, 16, 17), comprising:
a first substrate (101) and a second substrate (102), disposed to overlap each other;
a plurality of pixel structures (PX, PX1, PX2, PX3), disposed on the first substrate (101), wherein each pixel structure (PX, PX1, PX2, PX3) comprises a reflective electrode (RE);
a plurality of color filter patterns (CFP1, CFP2, CFP3), respectively overlapping a plurality of reflective electrodes (RE) of the pixel structures (PX, PX1, PX2, PX3);
a plurality of spacers (SP, SP1, SP2, SP3, SP-A, SP-B, SP-C, SP-D, SP-E, SP1-F, SP2-F, SP3-F, SP-G, SP"), disposed between the first substrate (101) and the second substrate (102); and
a liquid crystal layer (LCL), disposed between the first substrate (101) and the second substrate (102);
wherein the pixel structures (PX, PX1, PX2, PX3) comprise a first pixel structure (PX, PX1, PX2, PX3), the spacers (SP, SP1, SP2, SP3, SP-A, SP-B, SP-C, SP-D, SP-E, SP1-F, SP2-F, SP3-F, SP-G, SP") comprise a first spacer (SP, SP1, SP3, SP-A, SP-B, SP-C, SP-D, SP-E, SP1-F, SP2-F, SP3-F, SP-G), the color filter patterns (CFP1, CFP2, CFP3) comprise a first color filter pattern (CFP1, CFP2, CFP3), the reflective electrode (RE) of the first pixel structure (PX, PX1, PX2, PX3) overlaps the first spacer (SP, SP1, SP3, SP-A, SP-B, SP-C, SP-D, SP-E, SP1-F, SP2-F, SP3-F, SP-G) and the first color filter pattern (CFP1, CFP2, CFP3), and at least a portion of the first spacer (SP, SP1, SP3, SP-A, SP-B, SP-C, SP-D, SP-E, SP1-F, SP2-F, SP3-F, SP-G) does not overlap the first color filter pattern (CFP1, CFP2, CFP3).

2. The display panel (10, 11, 12, 13, 13A, 13B, 14, 17) according to claim 1, further comprising a plurality of light-transmitting patterns (TP1, TP2, TP3) that respectively overlap the plurality of reflective electrodes (RE) of the pixel structures (PX, PX1, PX2, PX3), wherein the light-transmitting patterns (TP1, TP2, TP3) comprise a first light-transmitting pattern (TP1, TP2, TP3), the reflective electrode (RE) of the first pixel structure (PX, PX1, PX2, PX3) overlaps the first light-transmitting pattern (TP1, TP2, TP3), and the first spacer (SP, SP1, SP3, SP-A, SP-B, SP-C, SP-D, SP-G) overlaps the first light-transmitting pattern (TP1, TP2, TP3).

3. The display panel (10, 11, 12, 14) according to claim 2, wherein an orthographic projection of the first spacer (SP, SP1, SP3, SP-A) on a substrate surface (102s) of the second substrate (102) is located within an orthographic projection of the reflective electrode (RE) of the first pixel structure (PX, PX1, PX2, PX3) on the substrate surface (102s).

4. The display panel (10, 11, 12, 14) according to claim 3, wherein the pixel structures (PX, PX1, PX2, PX3) further comprise a second pixel structure (PX, PX1, PX2, PX3), the color filter patterns (CFP1, CFP2, CFP3) further comprise a second color filter pattern (CFP1, CFP2, CFP3), the light-transmitting patterns (TP1, TP2, TP3) further comprise a second light-transmitting pattern (TP1, TP2, TP3), the spacers (SP, SP1, SP2, SP3, SP-A, SP-B, SP-C, SP-D, SP-E, SP1-F, SP2-F, SP3-F, SP-G, SP") further comprise a second spacer (SP, SP1, SP3, SP-A), the reflective electrode (RE) of the second pixel structure (PX, PX1, PX2, PX3) overlaps the second color filter pattern (CFP1, CFP2, CFP3), the second light-transmitting pattern (TP1, TP2, TP3), and the second spacer (SP, SP1, SP3, SP-A), the second spacer (SP, SP1, SP3, SP-A) overlaps the second light-transmitting pattern (TP1, TP2, TP3), and an orthographic projection of the second spacer (SP, SP1, SP3, SP-A) on the substrate surface (102s) is located within an orthographic projection of the reflective electrode (RE) of the second pixel structure (PX, PX1, PX2, PX3) on the substrate surface (102s).

5. The display panel (12) according to claim 3, further comprising a first alignment layer (AL1) and a second alignment layer (AL2) that are respectively disposed on the first substrate (101) and the second substrate (102) and have the liquid crystal layer (LCL) sandwiched therebetween, wherein the first alignment layer (AL1) has a first alignment direction (AD1), the second alignment layer (AL2) has a second alignment direction (AD2), an orthographic projection contour of the first spacer (SP-A) on the substrate surface (102s) is long-strip shaped, and an extending direction of the first spacer (SP-A) is parallel to the first alignment direction (AD1) or the second alignment direction (AD2).

6. The display panel (11) according to claim 3, wherein the pixel structures (PX, PX1, PX2, PX3) further comprise a second pixel structure (PX2), the color filter patterns (CFP1, CFP2, CFP3) further comprise a second color filter pattern (CFP2), the light-transmitting patterns (TP1, TP2, TP3) further comprise a second light-transmitting pattern (TP2), the spacers (SP, SP1, SP2, SP3, SP-A, SP-B, SP-C, SP-D, SP-E, SP1-F, SP2-F, SP3-F, SP-G, SP") further comprise a second spacer (SP2), the reflective electrode (RE) of the second pixel structure (PX2) overlaps the second color filter pattern (CFP2), the second light-transmitting pattern (TP2), and the second spacer (SP2), the second spacer (SP2) overlaps the second color filter pattern (CFP2), and an orthographic projection of the second spacer (SP2) on the substrate surface (102s) is located within an orthographic projection of the reflective electrode (RE) of the second pixel structure (PX2) on the substrate surface (102s).

7. The display panel (11) according to claim 4, wherein an orthographic projection area of the first spacer (SP1) on the substrate surface (102s) is different from an orthographic projection area of the second spacer (SP3) on the substrate surface (102s).

8. The display panel (11) according to claim 4, wherein the first spacer (SP1) has a first height (H1) along a normal direction of the substrate surface (102s), the second spacer (SP3) has a second height (H2) along the normal direction of the substrate surface (102s), and the first height (H1) is different from the second height.

9. The display panel (13, 13A, 13B) according to claim 1, wherein the pixel structures (PX, PX1, PX2, PX3) further comprise a second pixel structure (PX, PX1, PX2, PX3), the second pixel structure (PX, PX1, PX2, PX3) is adjacent to the first pixel structure (PX, PX1, PX2, PX3), the color filter patterns (CFP1, CFP2, CFP3) further comprise a second color filter pattern (CFP1, CFP2, CFP3), the reflective electrode (RE) of the second pixel structure (PX, PX1, PX2, PX3) overlaps the second color filter pattern (CFP1, CFP2, CFP3), an orthographic projection contour of the first spacer (SP-B, SP-C, SP-D) on a substrate surface (102s) of the second substrate (102) is long-strip shaped or dot-shaped, and the first spacer (SP-B, SP-C, SP-D) partially overlaps a region between the reflective electrode (RE) of the first pixel structure (PX, PX1, PX2, PX3) and the reflective electrode (RE) of the second pixel structure (PX, PX1, PX2, PX3).

10. The display panel (13A) according to claim 9, further comprising a first alignment layer (AL1) and a second alignment layer (AL2) that are respectively disposed on the first substrate (101) and the second substrate (102) and have the liquid crystal layer (LCL) sandwiched therebetween, wherein the first alignment layer (AL1) has a first alignment direction (AD1), the second alignment layer (AL2) has a second alignment direction (AD2), the orthographic projection contour of the first spacer (SP-C) on the substrate surface (102s) is long-strip shaped, an extending direction of the first spacer (SP-C) is parallel to the first alignment direction (AD1) or the second alignment direction (AD2), and a width of an end portion of the first spacer (SP-C) gradually decreases toward the first alignment direction (AD1) or the second alignment direction (AD2).

11. The display panel (17) according to claim 1, further comprising a first alignment layer (AL1) and a second alignment layer (AL2) that are respectively disposed on the first substrate (101) and the second substrate (102) and have the liquid crystal layer (LCL) sandwiched therebetween, wherein the first alignment layer (AL1) has a first alignment direction (AD1), the second alignment layer (AL2) has a second alignment direction (AD2), the pixel structures (PX, PX1, PX2, PX3) further comprise a second pixel structure (PX, PX1, PX2, PX3), the second pixel structure (PX, PX1, PX2, PX3) is adjacent to the first pixel structure (PX, PX1, PX2, PX3), the color filter patterns (CFP1, CFP2, CFP3) further comprise a second color filter pattern (CFP1, CFP2, CFP3), the reflective electrode (RE) of the second pixel structure (PX, PX1, PX2, PX3) overlaps the second color filter pattern (CFP1, CFP2, CFP3), an orthographic projection contour of the first spacer (SP-G) on a substrate surface (102s) of the second substrate (102) has a shape of a rhombus, an extending direction of a virtual connecting line (VC) of two opposite corners of four corners of the rhombus is parallel to the first alignment direction (AD1) or the second alignment direction (AD2), and the first spacer (SP-G) partially overlaps a region between the reflective electrode (RE) of the first pixel structure (PX, PX1, PX2, PX3) and the reflective electrode (RE) of the second pixel structure (PX, PX1, PX2, PX3).

12. The display panel (15, 16) according to claim 1, wherein a first portion of the reflective electrode (RE) of the first pixel structure (PX, PX1, PX2, PX3) overlaps the first color filter pattern (CFP1, CFP2, CFP3) but does not overlap the first spacer (SP-E, SP1-F), and a second portion of the reflective electrode (RE) of the first pixel structure (PX, PX1, PX2, PX3) overlaps the first spacer (SP-E, SP1-F) but does not overlap the first color filter pattern (CFP1, CFP2, CFP3).

13. The display panel (15) according to claim 12, further comprising a plurality of light-transmitting patterns (TP1-A, TP3-A) that respectively overlap the plurality of reflective electrodes (RE) of the pixel structures (PX, PX1, PX3), wherein the light-transmitting patterns (TP1-A, TP3-A) comprise a first light-transmitting pattern (TP1-A, TP3-A), the first portion and the second portion of the reflective electrode (RE) of the first pixel structure (PX, PX1, PX3) do not overlap the first light-transmitting pattern (TP1-A, TP3-A), and a third portion of the reflective electrode (RE) of the first pixel structure (PX, PX1, PX3) overlaps the first light-transmitting pattern (TP1-A, TP3-A) but does not overlap the first color filter pattern (CFP1, CFP3) and the first spacer (SP-E).

14. The display panel (14) according to claim 1, wherein the first pixel structure (PX, PX1, PX2, PX3) further comprises an insulating layer (130) and an active component (T), the spacers (SP, SP1, SP2, SP3, SP-A, SP-B, SP-C, SP-D, SP-E, SP1-F, SP2-F, SP3-F, SP-G, SP") further comprise a second spacer (SP"), the active component (T) is disposed on the first substrate (101), the insulating layer (130) is disposed on the active component (T) and has an opening (OP) that overlaps the reflective electrode (RE) of the first pixel structure (PX, PX1, PX2, PX3), the reflective electrode (RE) of the first pixel structure (PX, PX1, PX2, PX3) is disposed on the insulating layer (130) and extends into the opening (OP) to be electrically connected to the active component (T), and the opening (OP) of the insulating layer (130) overlaps the second spacer (SP").

15. The display panel (10, 11, 12, 13, 13A, 13B, 14, 15, 16, 17) according to claim 1, wherein the pixel structures (PX, PX1, PX2, PX3) further comprise a second pixel structure (PX, PX1, PX2, PX3), the color filter patterns (CFP1, CFP2, CFP3) further comprise a second color filter pattern (CFP1, CFP2, CFP3), the reflective electrode (RE) of the second pixel structure (PX, PX1, PX2, PX3) overlaps the second color filter pattern (CFP1, CFP2, CFP3), and an orthographic projection area of the first color filter pattern (CFP1, CFP2, CFP3) on a substrate surface (102s) of the second substrate (102) is different from an orthographic projection area of the second color filter pattern (CFP1, CFP2, CFP3) on the substrate surface (102s).
